# EUROPÄISCHE PATENTSCHRIFT

(11) **EP 1 740 402 B1**
(45) Veröffentlichungstag und Bekanntmachung des Hinweises auf die Patenterteilung: **17.12.2008**
(21) Anmeldenummer: 05745179.1
(22) Anmeldetag: 18.04.2005
(51) Int. Cl.: B60H 1/34

(54) **VORRICHTUNG ZUR BELÜFTUNG EINES FAHRZEUGS**
DEVICE FOR VENTILATING A VEHICLE
DISPOSITIF D'AERATION POUR VEHICULE

(30) Priorität: 19.04.2004 DE 102004019440
(43) Veröffentlichungstag der Anmeldung: 10.01.2007
(73) Patentinhaber: Behr GmbH & Co. KG, 70469 Stuttgart (DE)
(72) Erfinder: KÜHNEL, Wolfram, 70374 Stuttgart (DE); SCHRAMM, Volker, 71636 Ludwigsburg (DE)
(86) Internationale Anmeldenummer: PCT/EP2005/004070
(87) Internationale Veröffentlichungsnummer: WO 2005/100062

(56) Entgegenhaltungen:
- EP-A- 0 936 091
- DE-A1- 2 421 120
- DE-A1- 2 933 083
- DE-A1- 3 526 760
- DE-A1- 19 818 872
- DE-U1- 29 914 962

## Beschreibung

Die Erfindung betrifft eine Vorrichtung zur Belüftung eines Fahrzeugs nach dem Oberbegriff des Anspruchs 1.

DE 299 14 962 U1 beschreibt einen Luftauslaß einer Innenraumlüftung für ein Kraftfahrzeug, bei dem ein durch einen Zuleitungskanal zugeführter Luftstrom mittels einstellbarer Leitschaufeln mit einem Drall beaufschlagbar ist, wobei der Luftstrom durch eine zu dem Zuleitungskanal im wesentlichen senkrechte Austrittsöffnung in den Innenraum des Fahrzeugs eintritt. Derartige Luftauslässe sind im Wesentlichen zur Anbringung im Bereich einer Instrumententafel des Fahrzeugs vorgesehen.

Im modernen Kraftfahrzeugbau werden die Mittel zur Belüftung und Klimatisierung des Innenraums zunehmend aufwendiger. Insbesondere ist es gewünscht, die Luft zumindest wahlweise so zu verteilen, dass kein gerichteter und von den Insassen als störend empfundener Luftzug entsteht. Ferner ist es gewünscht, Luft auch gezielt in hinteren oder seitlichen Fahrzeugbereichen oder auch Dachbereichen aufströmen zu lassen, um eine verteilte und gegebenenfalls selektierbare Belüftung zu erreichen. Hierbei steht der begrenzte Bauraum in insbesondere den genannten Bereichen dem Wunsch nach diffus ausströmender Luft entgegen.

Ferner ist aus der DE 24 21 120 ein Luftauslaß für Lüftungs- und/oder Klimaanlagen bekannt, bei welchem innerhalb eines Kastens ein vertikales Leitblech angeordnet ist.

Es ist die Aufgabe der Erfindung, einen eingangs genannten Luftausströmer dahingehend zu verbessern, dass auch bei diffus bzw. möglichst ungerichtet ausströmende Luft eine mechanisch einfache Bauform und ein geringer Bauraumbedarf erzielt werden kann.

Diese Aufgabe wird für einen eingangs genannten Luftausströmer erfingdungsgemäß mit den kennzeichnenden Merkmalen des Anspruchs 1 gelöst.

Durch die Anordnung der Austrittsfläche in im wesentlichen paralleler Orientierung zu dem zugeführten Luftstrom ist eine besonders flache Bauweise ermöglicht, bei der dennoch ein mit einem Drall versehener und daher diffus austretender Luftstrom realisiert ist. Unter Drall ist dabei eine Drehung des Luftstromes zu verstehen, die letztlich dazu führt, dass der Luftstrom unterschiedliche Bereiche der Austrittsfläche in deutlich unterschiedlicher Richtung verlässt.

In der erfindungsgemäßen Vorrichtung umfassen die Ablenkmittel eine gebogene, insbesondere teilkreisförmige Wandung des Austrittselements, wobei eine Höhe der Wandung über den gebogenen Verlauf der Wandung abnimmt. Hierdurch wird auf einfache und kostengünstige Weise erreicht, dass der Luftstrom über den Verlauf der Ablenkmittel zum einen in unterschiedlichen Richtungen und zum anderen in möglichst gleich bleibendem Mengenfluss pro Austrittsflächeneinheit austritt.

Weiterhin bevorzugt ist ein Deckelelement vorgesehen, wobei die Austrittsfläche zwischen einem äußeren Rand des Deckelements und einer oberen Kante der Wandung verläuft. Bevorzugt weist dabei die Austrittsfläche die Form zumindest eines Teils eines Kreisringes auf, wodurch insgesamt eine besonders kontrollierte Führung des Luftstromes mit einfachen Mitteln ermöglicht ist und insbesondere kein gerichteter Anteil des Luftstroms etwa aus einem zentralen Bereich des Austrittselements austreten kann.

In einer weiteren bevorzugten Ausführungsform umfassen die Ablenkmittel eine Mehrzahl zueinander paralleler Wandungen, wobei der Luftstrom zumindest zwischen zwei der Wandungen geführt ist. Bevorzugt weisen die Wandungen dabei eine unterschiedliche Länge auf. Hierdurch ist eine weitere Verbesserung der Verteilung der gleichmäßigen Verteilung des Luftstroms auf verschiedene Bereiche der Austrittsfläche und somit in verschiedene Richtungen ermöglicht.

Besonders bevorzugt ist ein erfindungsgemäßes Austrittselement so dimensioniert, dass eine senkrecht zu der Austrittsfläche gemessene maximale Höhe des Austrittselements eine Höhe des Zuleitungskanals nicht wesentlich übersteigt. Dies ermöglicht eine insgesamt flache Bauweise der erfindungsgemäßen Vorrichtung.

Vorteilhaft kann vorgesehen sein, dass ein in der Austrittsebene gemessener maximaler Durchmesser des Austrittselements nicht wesentlich größer ist als das zweifache einer Breite des Zuleitungskanals. Hierdurch kann eine erfindungsgemäße Vorrichtung auch bei nur wenig zur Verfügung stehendem Bauraum eingesetzt werden.

In einer weiteren bevorzugten Ausführungsform der erfindungsgemäßen Vorrichtung sind eine Mehrzahl von Austrittselementen mit dem Zuleitungskanal verbunden. Vorteilhaft können dabei zumindest zwei Austrittselemente im wesentlichen spiegelsymmetrisch zueinander an dem Zuleitungskanal angeordnet sein, wobei zumindest ein Teil des Luftstroms im wesentlichen hälftig auf die beiden Austrittselemente verteilbar ist. Alternativ oder ergänzend dazu können auch zumindest zwei Austrittselemente in Richtung des Luftstroms nacheinander mit dem Zuleitungskanal verbunden sein. Insgesamt ergibt sich hierdurch eine große Flexibilität bei der Versorgung von Fahrzeugbereichen mit einer diffusen Belüftung.

In besonderem Maße bevorzugt weist eine erfindungsgemäße Vorrichtung keine einstellbar bewegbaren Elemente zur Einstellung der Ablenkmittel im normalen Fahrbetrieb des Fahrzeugs auf. Dies ermöglicht eine kleinbauende und kostengünstige Bauform der erfindungsgemäßen Vorrichtung und insbesondere des Austrittselements. Insbesondere kann daher ein erfindungsgemäßes Austrittselement nur aus wenigen Kunststoffteilen bestehen, wobei auch die Fertigung aus nur einem einzigen Kunststoffteil in einem Spritzgussverfahren möglich ist. In einer bevorzugten Form wird das Austrittselement in der Herstellung aus zwei Teilen, nämlich einem die Ablenkmittel umfassenden Element und einem aufsteckbaren und gegebenenfalls verklebten oder verclipsten Deckel, zusammengesetzt.

Eine erfindungsgemäße Vorrichtung ist besonders vorteilhaft im Bereich eines Dachhimmels eines Kraftfahrzeugs angeordnet. Alternativ oder ergänzend dazu kann sie auch im Bereich einer seitlichen Dachsäule eines Kraftfahrzeugs, an einem Passagier- oder Fahrersitz, im Bereich einer Instrumententafel und/oder in einem hinteren Innenraumbereich des Fahrzeugs angeordnet sein. Für all diese Anordnungen in einem Kraftfahrzeug ist die Vorrichtung aufgrund ihrer einfachen, raumsparenden und kostengünstigen Bauweise in Verbindung mit den Eigenschaften der diffusen Luftverteilung besonders geeignet.

Allerdings kann die erfindungsgemäße Vorrichtung auch im Bereich einer Instrumententafel des Fahrzeugs eingesetzt werden, wobei sie herkömmliche Belüftungsvorrichtungen ergänzen oder ersetzen kann.

Weitere Vorteile und Merkmale einer erfindungsgemäßen Vorrichtung ergeben sich aus den Ausführungsbeispielen sowie aus den abhängigen Ansprüchen.

Nachfolgend werden drei bevorzugte Ausführungsbeispiele einer erfindungsgemäßen Vorrichtung beschrieben und anhand der anliegenden Zeichnungen näher erläutert.
- Fig. 1: zeigt eine räumliche Ansicht einer ersten Ausführungsform einer erfindungsgemäßen Vorrichtung.
- Fig. 2: zeigt eine Draufsicht auf die Vorrichtung aus Fig. 1 in Richtung des Zuleitungskanals.
- Fig. 3: zeigt eine stirnseitige Draufsicht auf die Vorrichtung aus Fig. 1
- Fig. 4: zeigt eine teilweise räumliche Darstellung der Vorrichtung aus Fig. 1, wobei Strömungsrichtungen der Luft in verschiedenen Bereichen der Vorrichtung kenntlich gemacht sind.
- Fig. 5: zeigt eine räumliche Ansicht einer zweiten bevorzugten Ausführungsform einer erfindungsgemäßen Vorrichtung.
- Fig. 6: zeigt eine schematische Darstellung einer Draufsicht auf eine dritte bevorzugte Ausführungsform einer erfindungsgemäßen Vorrichtung.

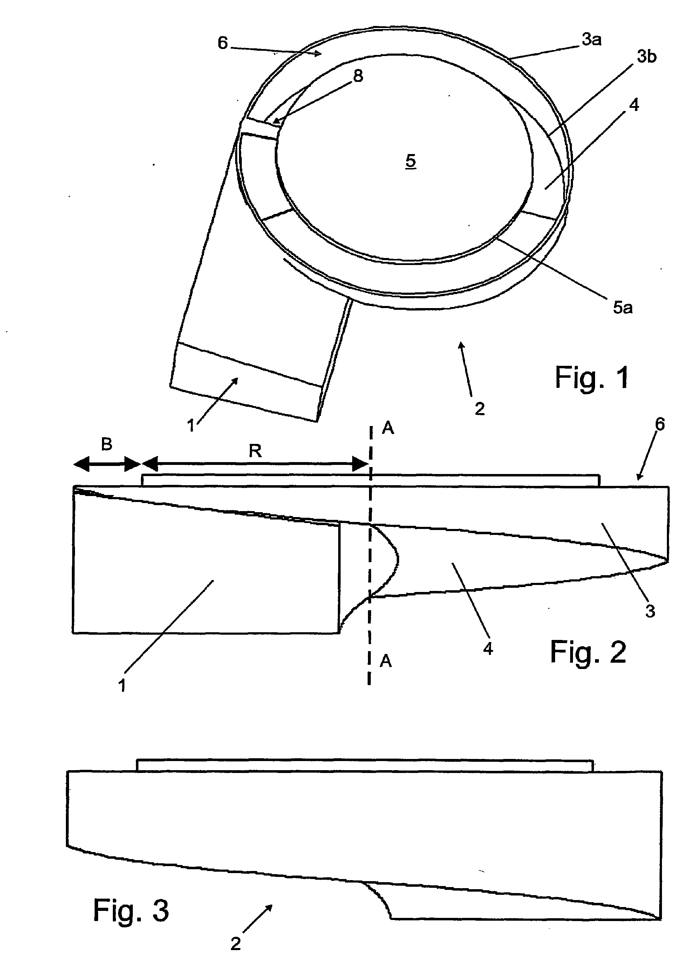

Die erste Ausführungsform gemäß Fig. 1 umfasst einen im wesentlichen geraden Zuleitungskanal 1, der vorliegend einen trapezförmigen Querschnitt aufweist (siehe insbesondere Fig. 2).

An den Zuleitungskanal 1 schließt sich in Strömungsrichtung der Luft ein Austrittselement 2 an. Das Austrittselement 2 umfasst eine gebogene, insbesondere teilkreisförmig gebogene Wandung 3, die an einem Eintrittsbereich 8 des Austrittselements 2 beginnt. Eine obere Abschlusskante 3a der Wandung verläuft im wesentlichen in einer Ebene, welche als Austrittsebene bezeichnet wird. Die gebogene Wandung 3 bildet ein Ablenkmittel für die in dem Austrittselement 2 strömende Luft.

Eine untere Abschlusskante 3b der Wandung verläuft nicht in einer Ebene, sondern bildet eine Spirale um eine Mittelachse A des Austrittselements (siehe Fig. 2).

Somit ist die Höhe der Wandung 3 über ihren gebogenen Verlauf nicht konstant. Als Höhe der Wandung 3 ist für einen gegebenen Punkt auf der oberen Abschlusskante 3a der Wandung jeweils der zur oberen Abschlusskante 3a senkrechte Abstand zur unteren Abschlusskante 3b definiert.

Ein Boden 4 des Austrittelements 2 bedeckt eine Unterseite des Austrittselements 2 vollständig und schließt mit dem Verlauf der unteren Abschlusskante 3b ab. Der Boden 4 ist daher nicht eben, sondern stellt eine spiralige Fläche entsprechend dem Verlauf der unteren Abschlusskante 3b dar.

Ein im wesentlichen kreisförmiger Deckel 5 ist in der Austrittsebene angeordnet, wobei ein Mittelpunkt des Deckels auf der Mittelachse A liegt. Der Deckel weist einen kleineren Radius R auf, als der konstante Abstand von der Mittelachse A zur oberen Abschlusskante 3a des Austrittelements 2 beträgt. Hierdurch verbleibt zwischen einem Rand 5a des Deckels 5 und der oberen Abschlusskante 3a der Wandung 3 eine im wesentlichen kreisringförmige offene Austrittsfläche 6 konstanter Breite B. Das Verhältnis der Breite B zum Radius R des Deckels 5 beträgt im vorliegenden Ausführungsbeispiel etwa 1:3,2. Je nach Anforderungsprofil an die Luftausströmung ist dieses Verhältnis durch die Wahl eines größeren oder kleineren Deckels 5 anpassbar.

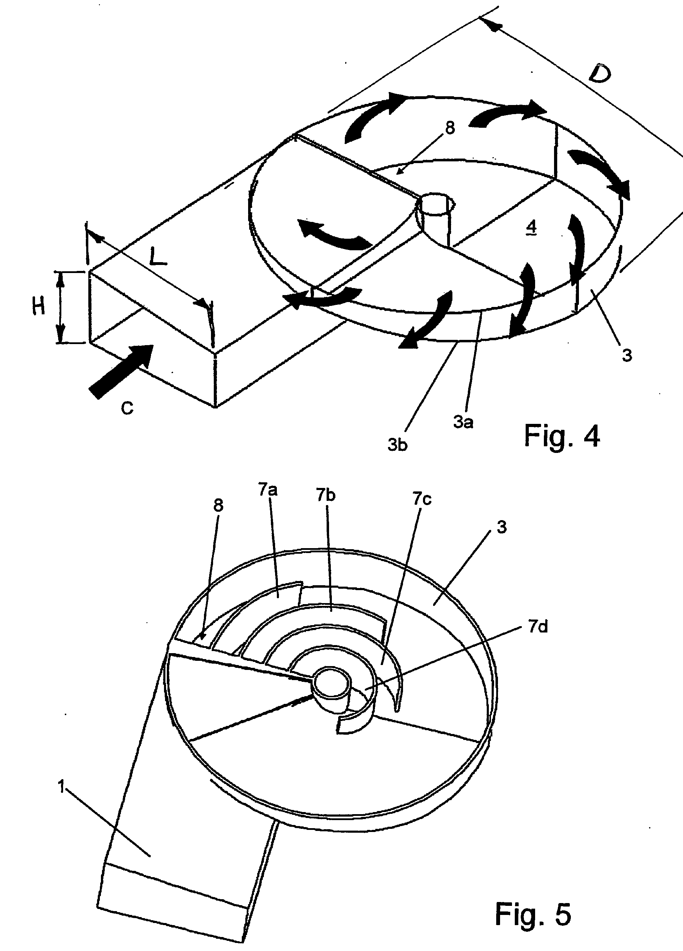

Die Darstellung gemäß Fig. 4 zeigt das Austrittselement 2 ohne den Deckel 5. Fig. 4 zeigt an verschiedenen Stellen der Austrittsfläche 6 die Richtung der dort jeweils austretenden Luft. Es ist ersichtlich, dass die Luft durch die Führung bzw. Ablenkung entlang der gebogenen Wandung 3 mit einem Drall versetzt wird. Die Luft tritt daher an unterschiedlichen Stellen der Austrittsfläche in unterschiedlichen Richtungen aus. Zudem tritt die Luft auch lokal betrachtet wirbelförmig aus, was durch die Biegung der Pfeile in Fig. 4 angedeutet ist. Insgesamt ist hierdurch ein besonders diffuser und ungerichteter Luftaustritt gewährleistet.

Die Abnahme der Höhe der Wandung 3 über ihren Umfang trägt maßgeblich dazu bei, dass über den Verlauf der Austrittsfläche 6 ein annähernd konstanter Austrittsstrom der Luft sichergestellt ist, da bedingt durch den sich in Umfangsrichtung verjüngenden Raum der lokale Luftdruck in dem Austrittselement in dem Maße dynamisch erhöht wird, wie er durch die zuvor ausgetretene Luft erniedrigt wird.

Eine Richtung C des Luftstroms im Bereich des Eintritts 8 des Austrittselements 2 ist insbesondere aus Fig. 4 ersichtlich und verläuft parallel zu den Wänden des Zuleitungskanals 1 in diesem Bereich. Diese Richtung C ist im wesentlichen parallel zu der Austrittsebene, in der die Austrittsfläche 6 liegt. Im vorliegenden Ausführungsbeispiel beträgt der Durchmesser D des Austrittselements 2 etwa 80 mm und die Breite des Zuleitungskanals 1 etwa 40 mm. Die maximale Höhe H des Zuleitungskanals 1 beträgt 20 mm. Diese Zahlenwerte sind nur beispielhaft zu verstehen. Für besonders flachbauende Austrittselemente 2, kann die Höhe H des Zuleitungskanals 1 weiter reduziert werden, beispielsweise auf 10 mm.

Es wird klargestellt, dass eine Verjüngung der Höhe der Wandung nicht zwingend erforderlich ist. Ein ähnlicher Effekt der gleichmäßigen Verteilung der Luft kann etwa durch eine sich über ihren Umfang verbreiternde Austrittsfläche erzielt werden, was zum Beispiel durch einen von der Kreisform abweichenden Deckel erzielt werden kann.

Ebenso muss die Austrittsfläche 6 nicht exakt in einer Ebene liegen. Es sind auch Ausführungen denkbar, bei denen die obere Umfangswandung spiralig verläuft. Im Sinne der Erfindung wird hierdurch immer noch eine Austrittsebene definiert. Wichtig ist, dass diese im wesentlichen parallel zu der Richtung C des Luftstroms im Eintrittsbereich 8 des Austrittelements 2 angeordnet ist, so dass eine flache und raumsparende Bauweise der erfindungsgemäßen Vorrichtung sichergestellt ist. Je nach Form des zur Verfügung stehenden Bauraums kann der Zuleitungskanal 1 dabei auch kurz vor seinem Eintritt in das Austrittselement 2 abgewinkelt sein.

Die Draufsicht gemäß Fig. 2 zeigt, dass ein in der Austrittsebene gemessener maximaler Durchmesser des Austrittelements 2 nicht wesentlich größer ist als das doppelte der Breite des Zuleitungskanals 1, welche vorliegend der Abstand zwischen den beiden parallelen Wänden des Zuleitungskanals 1 ist.

Zudem ist eine maximale Höhe (gemessen in Richtung der Mittelachse A) des Austrittselements 2 nicht wesentlich größer als eine maximale Höhe des Zuleitungskanals 1, die der Höhe der längeren der beiden parallelen Kanalwände entspricht. Größenordnungsmäßig liegt der Wert für die maximale Höhe bei etwa 10 bis 30 mm, insbesondere 20 mm.

Das zweite Ausführungsbeispiel der erfindungsgemäßen Vorrichtung gemäß Fig. 5 unterscheidet sich von dem ersten Ausführungsbeispiel dadurch, dass zusätzliche Ablenkmittel 7a, 7b, 7c, 7d vorgesehen sind. Diese Ablenkmittel umfassen jeweils zu der Mittelachse A konzentrische Wandungen, die parallel zu der äußeren Wandung 3 verlaufen und sich entsprechend über ihren Verlauf in ihrer Höhe verjüngen. Die Wandungen 7a, 7b, 7c, 7d beginnen wie die äußere Wandung 3 jeweils am Eintritt 8 des Austrittelements 2, weisen aber unterschiedliche Längen auf. Insbesondere folgt die innerste Wandung 7d dem kreisförmigen Verlauf des Luftstroms im Austrittselement 2 über den größten Kreiswinkel, und die äußere zusätzliche Wandung 7a verläuft über den kleinsten Kreiswinkel. Auch das zweite Ausführungsbeispiel umfasst einen Deckel 5, der jedoch der besseren Darstellung wegen in Fig. 5 nicht gezeigt ist.

Durch das zweite Ausführungsbeispiel wird insgesamt eine noch weiter verbesserte Gleichverteilung des austretenden Luftstroms über den Verlauf der Austrittsfläche erreicht. Zudem wird die Luft noch stärker mit einem Drall beaufschlagt, so dass eine besonders diffuse Ausströmung der Luft in den Innenraum des Fahrzeugs erreicht wird.

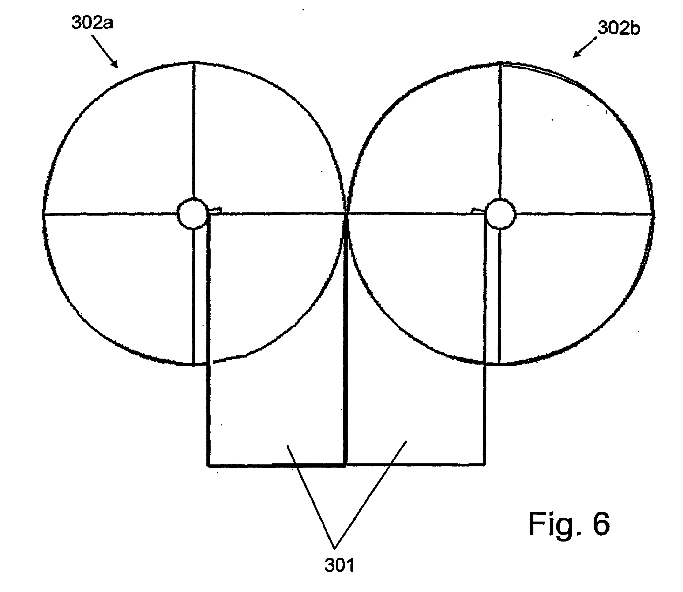

Ein drittes bevorzugtes Ausführungsbeispiel einer erfindungsgemäßen Vorrichtung ist in Fig. 6 dargestellt. Hierbei sind zwei Austrittselemente 302a, 302b, die jeweils einem der vorhergehenden Ausführungsbeispiele entsprechen, spiegelsymmetrisch zueinander angeordnet. Jeweils etwa die Hälfte eines Luftstromes aus einem besonders breiten Zuleitungskanal 301 tritt in jedes der Austrittselemente 302a, 302b ein.

Durch eine derartige parallele Anordnung mehrerer erfindungsgemäßer Austrittselemente lässt sich auf einfache Weise und mittels standardisierter Bauteile eine Verteilung auch größerer Luftströme erreichen. Alternativ oder ergänzend zu dem dritten Ausführungsbeispiel können Austrittelemente 2 auch nacheinander an dem gleichen (Haupt-) Zuleitungskanal angeordnet sein (nicht dargestellt). Insgesamt ermöglichen die zuvor beschriebenen Austrittselemente daher eine zugleich flexibel einsetzbare und Bauraum sparende diffuse Verteilung großer Luftmengen.

Abschließend sei erwähnt, dass sämtliche der zuvor beschriebenen erfindungsgemäßen Vorrichtungen den weiteren Vorteil aufweisen, dass auch bei Durchsatz großer Luftmengen eine sehr geringe Geräuschentwicklung durch den Luftstrom auftritt. Dies ist dadurch bedingt, dass die Verwirbelung bzw. Drallbeaufschlagung der Luft gleichmäßig über einen großen Raumbereich erfolgt und an keiner Stelle der Austrittelemente 2 große lokale Unterschiede von Luftdruck oder Strömungsgeschwindigkeit auftreten.

## Patentansprüche

1. Vorrichtung zur Belüftung eines Fahrzeugs, umfassend einen Zuleitungskanal (1) und ein Austrittselement (2) mit einer eine Austrittsebene der Luft definierenden Austrittsöffnung (6),
wobei ein Luftstrom durch den Zuleitungskanal (1) in einen Eintritt (8) des Austrittelements (2) führbar ist und wobei der Luftstrom aus dem Austrittelement (2) in einen Innenraum des Fahrzeugs eintritt, und
wobei das Austrittelement (2) ein Ablenkmittel (3, 7a, 7b, 7c, 7d) aufweist, mittels dessen zumindest einem Teil des Luftstroms ein Drall zuführbar ist,
wobei die Austrittsebene im Wesentlichen parallel zu einer Richtung (C) des Luftstroms im Bereich des Eintritts (8) des Austrittelements angeordnet ist, **dadurch gekennzeichnet, dass,**
die Ablenkmittel (3, 7a, 7b, 7c, 7d) eine gebogene, insbesondere teilkreisförmige Wandung (3) des Austrittselements (2) umfassen und eine Höhe der Wandung über den Verlauf der gebogenen Wandung (3) abnimmt.

2. Vorrichtung nach Anspruch 1, **dadurch gekennzeichnet, dass** das Austrittselement (2) ein Deckelelement (5) aufweist, wobei die Austrittsfläche (6) zwischen einem äußeren Rand (5a) des Deckelelements und einer oberen Kante (3a) der Wandung verläuft.

3. Vorrichtung nach einem der Ansprüche 1 bis 2, **dadurch gekennzeichnet, dass** die Austrittsfläche (6) die Form zumindest eines Teils eines Kreisrings aufweist.

4. Vorrichtung nach einem der Ansprüche 1 bis 3, **dadurch gekennzeichnet, dass** die Ablenkmittel (3, 7a, 7b, 7c, 7d) eine Mehrzahl zueinander paralleler Wandungen umfassen, wobei der Luftstrom zumindest zwischen zwei der Wandungen geführt ist.

5. Vorrichtung nach Anspruch 4, **dadurch gekennzeichnet, dass** die Wandungen (3, 7a, 7b, 7c, 7d) verschiedene Längen aufweisen.

6. Vorrichtung nach einem der Ansprüche 1 bis 5, **dadurch gekennzeichnet, dass** eine senkrecht zu der Austrittsfläche (6) gemessene maximale Höhe des Austrittselements eine Höhe des Zuleitungskanals (1) nicht wesentlich übersteigt.

7. Vorrichtung nach einem der Ansprüche 1 bis 6, **dadurch gekennzeichnet, dass** ein in der Austrittsebene (6) gemessener maximaler Durchmesser des Austrittselements nicht wesentlich größer ist als das zweifache einer Breite des Zuleitungskanals (1).

8. Vorrichtung nach einem der Ansprüche 1 bis 7, **dadurch gekennzeichnet, dass** eine Mehrzahl von Austrittselementen (2) mit dem Zuleitungskanal (1) verbunden ist.

9. Vorrichtung nach Anspruch 8, **dadurch gekennzeichnet, dass** zumindest zwei Austrittselemente (302a, 302b) im Wesentlichen spiegelsymmetrisch zueinander an dem Zuleitungskanal (1) angeordnet sind, wobei zumindest ein Teil des Luftstroms im wesentlichen hälftig auf die beiden Austrittselemente (302a, 302b) verteilbar ist.

10. Vorrichtung nach einem der Ansprüche 8 bis 9, **dadurch gekennzeichnet, dass** zumindest zwei Austrittselemente (2) in Richtung des Luftstroms nacheinander mit dem Zuleitungskanal (1) verbunden sind.

11. Vorrichtung nach einem der Ansprüche 1 bis 10, **dadurch gekennzeichnet, dass** an der Vorrichtung keine einstellbar bewegbaren Elemente zur Einstellung der Ablenkmittel (3, 7a, 7b, 7c, 7d) im normalen Fahrbetrieb des Fahrzeugs vorgesehen sind.

12. Vorrichtung nach einem der Ansprüche 1 bis 11, **dadurch gekennzeichnet, dass** die Vorrichtung im Bereich eines Dachhimmels eines Kraftfahrzeugs angeordnet ist.

13. Vorrichtung nach einem der Ansprüche 1 bis 11, **dadurch gekennzeichnet, dass** die Vorrichtung im Bereich einer seitlichen Dachsäule eines Kraftfahrzeugs angeordnet ist.

14. Vorrichtung nach einem der Ansprüche 1 bis 11, **dadurch gekennzeichnet, dass** die Vorrichtung an einem Passagier- oder Fahrersitz eines Kraftfahrzeugs angeordnet ist.

15. Vorrichtung nach einem der Ansprüche 1 bis 11, **dadurch gekennzeichnet, dass** die Vorrichtung in einem hinteren Innenraumbereich eines Kraftfahrzeugs angeordnet ist.

16. Vorrichtung nach einem der Ansprüche 1 bis 11, **dadurch gekennzeichnet, dass** die Vorrichtung im Bereich einer Instrumententafel eines Kraftfahrzeugs angeordnet ist.

## Claims

1. A device for ventilating a vehicle, comprising a feed duct (1) and an outlet element (2) having an outlet opening (6) which defines an outlet plane of the air,
it being possible to conduct an airstream through the feed duct (1) into an inlet (8) of the outlet element (2), and the airstream from the outlet element (2) entering an interior space of the vehicle, and
the outlet element (2) having a deflection means (3, 7a, 7b, 7c, 7d) by means of which an eddy can be supplied to at least part of the airstream,
and the outlet plane is arranged essentially parallel to a direction (C) of the airstream in the region of the inlet (8) of the outlet element,
**characterized in that** the deflection means (3, 7a, 7b, 7c, 7d) comprise a bent wall, in particular in the shape of part of a circle (3) of the outlet element (2) and a height of the wall decreases over the extent of the bent wall (3).

2. The device as claimed in claim 1, **characterized in that** the outlet element (2) has a cover element (5), the outlet face (6) extending between an outer edge (5a) of the cover element and an upper boundary (3a) of the wall.

3. The device as claimed in one of claims 1 to 2, **characterized in that** the outlet face (6) has the form of at least part of a circular ring.

4. The device as claimed in one of claims 1 to 3, **characterized in that** the deflection means (3, 7a, 7b, 7c, 7d) comprise a multiplicity of walls which are parallel to one another, the airstream being guided at least between two of the walls.

5. The device as claimed in claim 4, **characterized in that** the walls (3, 7a, 7b, 7c, 7d) have various lengths.

6. The device as claimed in one of claims 1 to 5, **characterized in that** a maximum height of the outlet element which is measured perpendicularly to the outlet face (6) does not significantly exceed a height of the feed duct (1).

7. The device as claimed in one of claims 1 to 6, **characterized in that** a maximum diameter of the outlet element measured in the outlet plane (6) is not significantly greater than twice a width of the feed duct (1).

8. The device as claimed in one of claims 1 to 7, **characterized in that** a multiplicity of outlet elements (2) is connected to the feed duct (1).

9. The device as claimed in claim 8, **characterized in that** at least two outlet elements (302a, 302b) are arranged essentially mirror-symmetrically with respect to one another on the feed duct (1), it being possible to distribute at least part of the airstream, essentially in halves, between the two outlet elements (302a, 302b).

10. The device as claimed in one of claims 8 to 9, **characterized in that** at least two outlet elements (2) are connected in succession to the feed duct (1) in the direction of the airstream.

11. The device as claimed in one of claims 1 to 10, **characterized in that** no elements which can be moved in an adjustable way for adjusting the deflection means (3, 7a, 7b, 7c, 7d) in the normal driving mode of the vehicle are provided on the device.

12. The device as claimed in one of claims 1 to 11, **characterized in that** the device is arranged in the region of an inner roof lining of a motor vehicle.

13. The device as claimed in one of claims 1 to 11, **characterized in that** the device is arranged in the region of a lateral roof column of a motor vehicle.

14. The device as claimed in one of claims 1 to 11, **characterized in that** the device is arranged on a passenger's seat or driver's seat of a motor vehicle.

15. The device as claimed in one of claims 1 to 11, **characterized in that** the device is arranged in a rear interior space region of a motor vehicle.

16. The device as claimed in one of claims 1 to 11, **characterized in that** the device is arranged in the region of an instrument panel of a motor vehicle.

## Revendications

1. Dispositif de ventilation d'un véhicule, comprenant un conduit d'alimentation (1) et un élément de sortie (2) comportant une ouverture de sortie (6) définissant un plan de sortie de l'air,
où un flux d'air peut être dirigé, à travers le conduit d'alimentation (1), dans une entrée (8) de l'élément de sortie (2), et où le flux d'air sortant de l'élément de sortie (2) entre dans l'habitacle du véhicule, et
où l'élément de sortie (2) présente un moyen formant déflecteur (3, 7a, 7b, 7c, 7d) au moyen duquel un tourbillon peut être fourni au moins à une partie du flux d'air,
où le plan de sortie est disposé, dans la zone de l'entrée (8) de l'élément de sortie, sensiblement de façon parallèle à une direction (C) du flux d'air,
**caractérisé en ce que** les moyens formant déflecteurs (3, 7a, 7b, 7c, 7d) comprennent une paroi courbe (3) de l'élément de sortie (2), en particulier en forme de cercle primitif, et une hauteur de la paroi diminue sur l'étendue de la paroi courbe (3).

2. Dispositif selon la revendication 1, **caractérisé en ce que** l'élément de sortie (2) présente un élément formant couvercle (5), où la surface de sortie (6) s'étend entre un bord extérieur (5a) de l'élément formant couvercle et une arête supérieure (3a) de la paroi.

3. Dispositif selon l'une ou l'autre des revendications 1 et 2, **caractérisé en ce que** la surface de sortie (6) présente la forme d'au moins une partie d'une couronne circulaire.

4. Dispositif selon l'une quelconque des revendications 1 à 3, **caractérisé en ce que** les moyens formant déflecteurs (3, 7a, 7b, 7c, 7d) comportent une pluralité de parois parallèles entre elles, où le flux d'air est guidé au moins entre deux des parois.

5. Dispositif selon la revendication 4, **caractérisé en ce que** les parois (3, 7a, 7b, 7c, 7d) présentent différentes longueurs.

6. Dispositif selon l'une quelconque des revendications 1 à 5, **caractérisé en ce qu'**une hauteur maximum de l'élément de sortie, mesurée perpendiculairement à la surface de sortie (6), ne dépasse pas, de façon importante, une hauteur du conduit d'alimentation (1).

7. Dispositif selon l'une quelconque des revendications 1 à 6, **caractérisé en ce qu'**un diamètre maximum de l'élément de sortie, mesuré dans le plan de sortie (6), n'est pas beaucoup plus grand que le double d'une largeur du conduit d'alimentation (1).

8. Dispositif selon l'une quelconque des revendications 1 à 7, **caractérisé en ce qu'**une pluralité d'éléments de sortie (2) est raccordée au conduit d'alimentation (1).

9. Dispositif selon la revendication 8, **caractérisé en ce qu'**au moins deux éléments de sortie (302a, 302b) sont disposés sur le conduit d'alimentation (1), sensiblement de façon symétrique l'un par rapport à l'autre, où au moins une partie du flux d'air peut, à chaque fois, être répartie sensiblement à moitié, sur les deux éléments de sortie (302a, 302b).

10. Dispositif selon l'une ou l'autre des revendications 8 et 9, **caractérisé en ce qu'**au moins deux éléments de sortie (2) sont raccordés successivement au conduit d'alimentation (1), en direction du flux d'air.

11. Dispositif selon l'une quelconque des revendications 1 à 10, **caractérisé en ce qu'**il n'est prévu, sur le dispositif, aucun élément mobile de façon réglable servant au réglage des moyens formant déflecteurs (3, 7a, 7b, 7c, 7d), au cours de la marche normale du véhicule.

12. Dispositif selon l'une quelconque des revendications 1 à 11, **caractérisé en ce que** le dispositif est placé dans la zone d'un pavillon d'un véhicule automobile.

13. Dispositif selon l'une quelconque des revendications 1 à 11, **caractérisé en ce que** le dispositif est placé dans la zone d'un montant de toit latéral d'un véhicule automobile.

14. Dispositif selon l'une quelconque des revendications 1 à 11, **caractérisé en ce que** le dispositif est placé sur un siège passager ou conducteur d'un véhicule automobile.

15. Dispositif selon l'une quelconque des revendications 1 à 11, **caractérisé en ce que** le dispositif est placé dans une zone intérieure située à l'arrière d'un véhicule automobile.

16. Dispositif selon l'une quelconque des revendications 1 à 11, **caractérisé en ce que** le dispositif est placé dans la zone d'un tableau de bord d'un véhicule automobile.
